# FASCICULE DE BREVET EUROPEEN

(11) **EP 1 538 067 B1**
(45) Date de publication et mention de la délivrance du brevet: **22.10.2008**
(21) Numéro de dépôt: 04300836.6
(22) Date de dépôt: 01.12.2004
(51) Int. Cl.: B62D 7/15, B62D 7/16, B62D 7/20

(54) **Essieu pour véhicule automobile et actionneur d'un tel essieu**
Kraftfahrzeugachse und Stellglied für solche Achse
Vehicle axle and actuator for said axle

(30) Priorité: 02.12.2003 FR 0314137
(43) Date de publication de la demande: 08.06.2005
(73) Titulaire: Renault, 92109 Boulogne Billancourt (FR)
(72) Inventeur: CALEGARI, Lionel, 78990, ELANCOURT (FR); SALLAT, Christian, 78490, BOISSY SANS AVOIR (FR)

(56) Documents cités:
- EP-A- 0 015 015
- EP-A- 0 647 554
- EP-A- 1 245 473
- DE-A- 10 019 563
- US-A- 2 225 966
- US-A- 3 874 473
- US-A- 4 225 148
- US-A- 4 336 953
- US-A- 4 796 904
- PATENT ABSTRACTS OF JAPAN vol. 0113, no. 64 (M-646), 27 novembre 1987 (1987-11-27) -& JP 62 139759 A (MAZDA MOTOR CORP), 23 juin 1987 (1987-06-23)

## Description

La présente invention concerne un essieu pour véhicule automobile à au moins quatre roues directrices, et un actionneur permettant la commande d'un tel essieu.

Un essieu de véhicule automobile comporte généralement deux bras oscillants longitudinaux portant chacun une roue à une de leur extrémité, et qui sont articulés à leur autre extrémité sur la carrosserie du véhicule. Des moyens élastiques et amortisseurs prenant appui sur les bras soutiennent la carrosserie, et, dans le cas d'un essieu souple, une barre transversale anti-dévers élastiquement déformable en torsion est rigidement reliée par ses extrémités aux deux bras oscillants.

Dans les virages, les roues d'un véhicule automobile subissent des efforts latéraux dans la direction du virage. Afin d'améliorer l'équilibre du véhicule et contrôler de façon active son comportement en lacets, un dispositif commandant une rotation limitée des roues arrières est installé. On parle alors de système quatre roues directrices.

Les documents DE 100 19 563 et EP 0 647 554 décrivent chacun un essieu de véhicule automobile comprenant des bielles reliées à des supports de roues pouvant pivoter angulairement autour d'un axe vertical, un levier de direction articulé sur les bielles et un actionneur hydraulique pour permettre l'orientation des roues.

Le document EP 1 245 473 décrit un essieu de véhicule automobile muni d'une bielle articulée, à chacune de ses extrémités, sur des bras liés rigidement à des supports de roues, et d'un actionneur pour commander l'orientation angulaire des roues.

Le document US 4 796 904, qui montre le préambule de la revendication 1, décrit un essieu de véhicule automobile équipé de deux bielles reliées à des supports de roues et articulées sur un palonnier qui comprend une portion filetée coopérant avec un bras de déplacement d'un actionneur pour permettre d'obtenir un changement d'orientation angulaire des roues arrière.

On connaît par la demande de brevet EP-A-0 890 499, un dispositif d'orientation des roues arrières comprenant un moteur rotatif creux dont le rotor intérieur est accouplé avec un train épicycloïdal comprenant un écrou coopérant avec la partie filetée d'un bras, portant chacune de ses extrémités une rotule reliée à une roue arrière. La rotation de l'écrou, bloqué en translation, permet le déplacement du bras suivant son axe. Les roues sont ainsi commandées en rotation par cet essieu dit multibras, Un tel dispositif possède l'inconvénient de présenter un encombrement important et de nécessiter un actionneur de structure complexe pour pouvoir être centré par rapport à l'axe de poussée.

La présente invention a donc pour objet de résoudre ces inconvénients en proposant un essieu commandé par un actionneur centré par rapport à l'axe de poussée et n'induisant pas d'efforts parasites sur le train.

A cet effet, l'essieu selon l'invention destiné à un véhicule automobile à au moins quatre roues directrices comprend au moins deux bras oscillants articulés sur ledit véhicule autour d'un axe de rotation horizontal et portant des supports de roues aptes à pivoter selon un axe sensiblement vertical par rapport aux bras oscillants, et une tringlerie commune de commande d'orientation des roues reliée aux support de roues. L'axe de rotation des roues est distinct de l'axe de rotation des bras oscillants. La tringlerie commune d'orientation des roues comprend un palonnier commandé par un actionneur linéaire comprenant un bras de déplacement mobile suivant son axe et des moyens moteurs alignés avec l'axe du bras de déplacement. L'axe du bras de déplacement est confondu avec l'axe de rotation des bras oscillants.

Un tel essieu présente l'avantage de nécessiter une zone d'encombrement beaucoup plus réduite permettant par exemple de libérer un logement pour une roue de secours, dans le cas d'un essieu arrière, par rapport à un essieu multibras. Par ailleurs, un tel essieu engendre des coûts de fabrication réduits ne nécessitant pas d'actionneur utilisant un moteur de type particulier.

Cet essieu a également l'avantage d'être commandé par un actionneur dont l'axe du bras de déplacement peut être confondu avec l'axe de rotation du train arrière, axe sur lequel les bras oscillants sont articulés sur la carrosserie du véhicule, transversal par rapport à l'axe longitudinal du véhicule, dans le cas d'un essieu arrière. Ainsi, étant donné que les moyens moteurs de l'actionneur sont alignés avec l'axe du bras de déplacement, l'actionneur est neutre lorsque l'essieu débat, il n'induit pas des efforts parasites d'inertie.

Il est également possible avec un tel essieu de positionner l'actionneur loin des roues du véhicule automobile, et proche des moyens élastiques, et amortisseurs prenant appui sur les bras oscillants et soutenant la carrosserie, afin de ne pas réduire l'efficace élastique du train.

De préférence, l'actionneur linéaire est décentré par rapport à l'axe longitudinal médian du véhicule automobile.

Un tel essieu a l'avantage de pouvoir orienter les roues du véhicule avec un actionneur pouvant être placé hors de sources chaudes se trouvant sur le véhicule automobile, tel que le tuyau d'échappement des gaz de combustion du moteur et ne comprenant qu'une unique sortie en translation. Des moyens d'accrochage de l'actionneur sur la carrosserie du véhicule automobile peuvent être alignés avec l'axe du bras de déplacement de l'actionneur. L'accrochage de l'actionneur peut également être réalisé sur un bras oscillant de l'essieu afin de supprimer certains mouvements induits par le mouvement de l'essieu par rapport à la carrosserie.

Les moyens moteurs de l'actionneur comprennent avantageusement un moteur rotatif et un moyen de conversion d'un mouvement de rotation en un mouvement de translation. Le moteur rotatif est par exemple un moteur électrique pouvant être accouplé avec un réducteur de type coaxial. Les moyens de conversion peuvent être du type vis-écrou et un de ses deux éléments peut également être bloqué en translation.

Dans un mode de réalisation, le moteur rotatif est à l'intérieur du moyen de conversion de type vis-écrou. Avec une telle disposition, l'essieu présent l'avantage d'être commandé par un actionneur ayant un encombrement particulièrement réduit.

L'invention sera mieux comprise à l'étude de la description détaillée de quelques modes de réalisation nullement limitatifs et illustrés par les dessins annexés sur lesquels :
- la figure 1 est une vue en perspective d'un essieu:

- la figure 2 est un schéma de principe de l'actionneur de l'essieu souple suivant un premier mode de réalisation ;
- la figure 3 est un schéma de principe de l'actionneur de l'essieu souple suivant un deuxième mode de réalisation; et
- la figure 4 est un schéma de principe de l'actionneur de l'essieu souple suivant un troisième mode de réalisation.

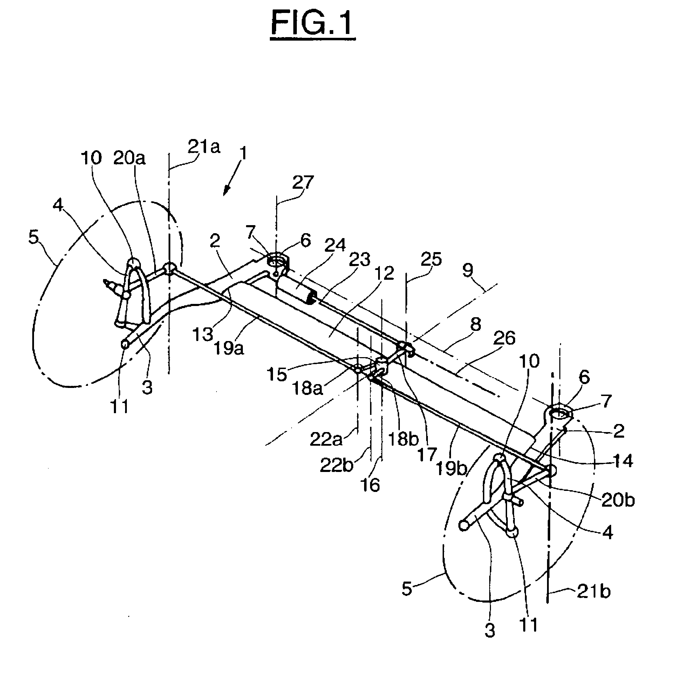

A titre d'exemple, un essieu souple a été représente sur la figure 1. Il sera compris que tout type d'essieu peut convenir à la présente invention. Un essieu souple 1 comprend deux bras oscillants longitudinaux 2 . Chaque bras oscillant 2 est relié par une extrémité 3, dirigée vers l'arrière du véhicule à un support de roues 4. Les roues sont symbolisées par des ellipses 5. L'autre extrémité 6 des bras oscillants 2, dirigée vers l'avant du véhicule, est articulée à la carrosserie du véhicule (non représentée) au niveau d'un alésage 7. Les deux bras oscillants 2 sont articulés sur la carrosserie autour d'un même axe de rotation 8, transversal par rapport à l'axe longitudinal médian 9 du véhicule. Chaque support de roue 4 est relié aux bras oscillants 2 par deux articulations 10 et 11, de façon connue par exemple avec des rotules. Une traverse 12, élastiquement déformable en torsion, est rigidement reliée par ses extrémités 13 et 14 aux deux bras oscillants 2, sensiblement parallèlement et à proximité de l'axe de rotation 8. La traverse12 peut présenter un profil en forme de V couché, dont l'ouverture est dirigée vers l'avant du véhicule. Bien entendu des traverses de forme différentes peuvent être utilisées. Un palonnier 15 est relié sensiblement au milieu de la traverse 12, par un axe d'articulation 16 sensiblement vertical. Le palonnier 15 s'étendant transversalement à la traverse 12, comporte une extrémité 17 dirigée vers l'avant du véhicule, et deux extrémités 18a et 18b dirigées vers l'arrière du véhicule. Les extrémités 18a et 18b du palonnier sont reliées à chaque support de roue 4 par deux bielles 19a et 19b sensiblement parallèles à la traverse 12 par l'intermédiaire de deux bras 20a et 20b, s'étendant vers l'avant du véhicule de façon sensiblement horizontal. L'extrémité de la bielle 19a, respectivement 19b, est alors articulée à l'extrémité libre du bras 20a, respectivement 20b, autour d'un axe 21a, respectivement 21b, sensiblement vertical, tandis que l'autre extrémité, est articulée à l'extrémité 18a, respectivement 18b, du palonnier autour d'un axe 22a, respectivement 22b, sensiblement vertical. Le palonnier 15 peut présenter par exemple une forme de fourchette, dont l'extrémité du manche forme l'extrémité avant 17, et l'extrémité des dents forme les extrémités arrières 18a et 18b. L'axe de rotation 16 du palonnier 15 est fixé sur les deux dents de la fourchette. Bien entendu d'autres formes peuvent être envisagées. L'extrémité avant 17 du palonnier est reliée par l'intermédiaire d'un bras de déplacement 23 et d'un actionneur linéaire 24 au bras oscillant gauche 2. Bien entendu, il est possible de relier l'actionneur linéaire 24 au bras oscillant droit 2. L'extrémité du bras de déplacement 23 est articulée à l'extrémité avant 17 du palonnier autour d'un axe 25 sensiblement vertical. L'axe 26 du bras de déplacement 23 est sensiblement parallèle à la traverse 12. L'actionneur linéaire 24 est décentré par rapport à l'axe longitudinal médian 9 du véhicule automobile. Il est articulé à l'extrémité avant 6 du bras oscillant gauche autour d'un axe sensiblement vertical 27, passant par l'axe 26 du bras de déplacement 23. Bien entendu, l'actionneur 24 peut également être fixé à différents endroits de la carrosserie du véhicule, il peut avantageusement être placé de façon que l'axe 26 du bras de déplacement 23 est confondu avec l'axe de rotation 8 des deux bras oscillants, l'axe 26 du bras déplacement 23 doit toutefois rester sensiblement parallèle à la traverse 12.

Le fonctionnement de l'essieu 1 est le suivant, l'actionneur 24 commande la translation du bras de déplacement 23 qui provoque la rotation du palonnier 15 autour de son axe 16 dans le sens horaire. Cette rotation déplace l'extrémité arrière 18 du palonnier vers la gauche du véhicule, ce qui provoque la rotation des supports de roues 4, autour d'un axe sensiblement vertical, vers la gauche par l'intermédiaire des bielles 19a et 19b. Une translation du bras de déplacement 23 dans le sens inverse fait tourner le palonnier 15 dans le sens inverse provoquant la rotation des roues vers la droite.

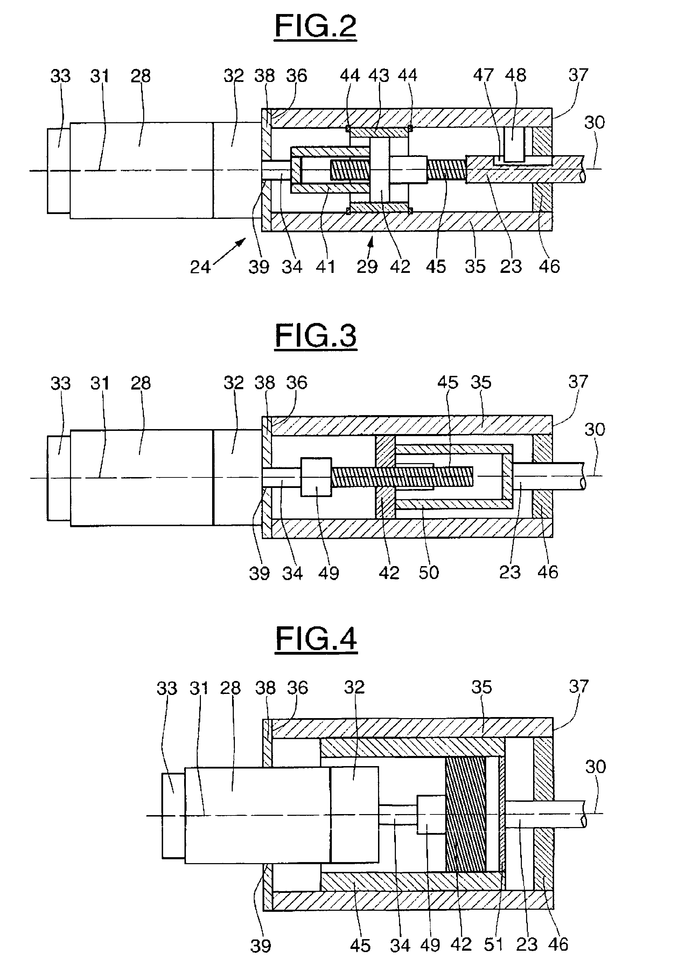

Sur la figure 2, un actionneur linéaire, référencé 24 dans son ensemble comprend un moteur rotatif 28 et un ensemble de conversion 29 d'un mouvement de rotation en mouvement de translation. L'axe 30 de l'ensemble de conversion 29 est coaxial avec l'axe 31 du moteur rotatif 28. Le moteur rotatif 28, par exemple électrique, comprend un stator et un rotor (non représentées). Le rotor du moteur rotatif 28 est accouplé à une extrémité à un axe d'entrée du réducteur 32 (non représenté), et à l'autre extrémité à un capteur de position 33. Le réducteur 32 comprend un arbre de sortie 34, coaxial avec l'axe 31 du moteur rotatif 28 relié à l'ensemble de conversion 29. L'ensemble de conversion 29 comprend un carter 35 de forme cylindrique comprenant des surfaces frontales radiales 36 et 37. Une pièce cylindrique 38, comprenant une ouverture 39 permettant le passage de l'arbre de sortie 34 du réducteur 32, vient en appui axial contre la surface frontale 36 du carter 35. L'arbre de sortie 34 du réducteur 32 est accouplé avec une pièce de liaison 41 de forme cylindrique, par un élément de transmission du mouvement de rotation, par exemple avec une clavette montée sur l'arbre de sortie du réducteur 32 (non représentée). La pièce de liaison 41 est fixée sur un écrou 42 à l'aide d'éléments de fixation, par exemple des vis (non représentées). L'écrou 42 est monté sur un organe de support 43, pouvant être par exemple un roulement à billes 43, ou un palier glissant bloqué en translation suivant l'axe 30 de l'ensemble de conversion 29 par exemple par des anneaux élastiques 44 montés dans le carter 35, et bloquant en translation l'écrou 42 (non représenté). L'écrou 42 est monté avec une vis 45 de même diamètre nominal comprenant un filet coopérant avec l'écrou. La vis 45, par exemple une vis à bille, a un diamètre inférieur au diamètre extérieur du moteur rotatif 28. La vis 45 s'étendant est accouplée au bras de déplacement 23 de l'actionneur 24 de manière rigide. Le bras de déplacement 23, coaxial avec l'axe 31 du moteur rotatif 28, est en saillie par rapport au carter 35 de façon à être relié à l'extrémité avant du palonnier 17 (figure 1). Le bras de déplacement 23 est supporté par un palier coulissant 46 accouplé de manière rigide au carter 35 par un élément de fixation, par exemple des vis (non représentés). Le bras de déplacement 23 comporte une encoche 47 s'étendant axialement, pouvant être de forme rectangulaire. Une saillie de butée et d'anti-rotation 48, de forme correspondante à celle de l'encoche est fixée au carter 35 par un élément de fixation (non représenté), et immobilise en rotation le bras de déplacement 23 ainsi que la vis 45.

Le fonctionnement de l'actionneur 24 est le suivant, le moteur rotatif 28 entraîne en rotation l'arbre d'entrée du réducteur 32 qui transmet le mouvement de rotation, avec une vitesse réduite, par l'intermédiaire de son arbre de sortie 34 et de la pièce de liaison 41, à l'écrou 42. La rotation de l'écrou 42 provoque la translation de la vis 45 suivant son axe et du bras de déplacement 23. Le capteur de position 33 détecte la position du rotor du moteur rotatif 28 afin de déterminer le positionnement du bras de déplacement 23 qui commande la rotation des roues arrières.

Dans la variante de réalisation de l'actionneur illustrée sur la figure 3, sur laquelle les éléments identiques aux figures précédentes portent les mêmes références, l'arbre de sortie 34 du réducteur 32, coaxial avec l'axe 31 du moteur rotatif 28, est relié à la vis 45 par un organe d'accouplement 49. L'organe d'accouplement 49 peut être par exemple une pièce fixée rigidement sur la vis 45 comprenant un logement apte à coopérer avec une clavette montée sur l'arbre de sortie du réducteur. La vis 45 coopère avec un écrou 42 de même diamètre nominal. L'écrou 42 est accouplé par exemple avec des vis (non représentées) avec une pièce de liaison 50 de forme cylindrique, s'étendant axialement. La pièce de liaison 50 est accouplée avec le bras de déplacement 23 par exemple avec des vis (non représentées). Le bras de déplacement 23 est supporté par un palier coulissant 46 accouplé de manière rigide au carter 35 par un élément de fixation (non représenté). L'écrou 42 est bloqué en rotation par un carter 35 comprenant des glissières (non représentées). Il est possible de prévoir sur le carter 35, par exemple au niveau des glissières, des butées en translation de l'écrou 42.

Le fonctionnement de l'actionneur 24 est le suivant, le moteur rotatif 28 entraîne en rotation l'arbre d'entrée du réducteur 32 qui transmet le mouvement de rotation, avec une vitesse réduite, par l'intermédiaire de son arbre de sortie 34 et de l'organe d'accouplement 49, à la vis 45. La rotation de la vis 45 provoque la translation de l'écrou 42 le long des glissières du carter 45, et du bras de déplacement 23.

Dans la variante de réalisation de l'actionneur illustrée sur la figure 4, sur laquelle les éléments identiques aux figures précédentes portent les mêmes références, l'arbre de sortie 34 du réducteur 32, coaxial avec l'axe du 30 moteur rotatif 28, est relié à l'écrou 42 par l'organe d'accouplement 49. Le diamètre intérieur de la vis 45 est sensiblement supérieur aux différents diamètres du réducteur 32, du moteur 28 et du capteur de position 33. La vis 45, dont le filetage est à l'intérieur, coopérant avec l'écrou 42, dont le filetage est à l'extérieur, comprend à son extrémité une pièce de liaison 51 de forme cylindrique accouplée avec le bras de déplacement 23. De manière analogue au mode de réalisation précédent, la vis 45 est bloquée en rotation par un carter 35 comprenant des glissières (non représentées), pouvant également comprendre des butées de translation.

Un tel mode de réalisation permet, comme cela est représenté sur la figure, de disposer le réducteur 32 ainsi qu'une partie du moteur rotatif 28, à l'intérieur de la vis 45. Il est également envisageable de disposer le moteur rotatif 28 entièrement à l'intérieur de la vis 45. Cette réalisation permet donc d'obtenir un essieu 1 commandé par un actionneur 24 ayant un encombrement particulièrement réduit.

Le fonctionnement de l'actionneur 24 est similaire au fonctionnement de l'actionneur 24 de la figure précédente. Les modes de réalisations précédemment décrits sont nullement limitatifs, il est par exemple possible d'envisager de supprimer le réducteur 32 de l'actionneur 24 et de relier ainsi directement le moteur rotatif 28 à la pièce de liaison 41 ou à l'organe d'accouplement 49. Il peut être également envisageable, de disposer le capteur 33, le moteur rotatif 28 ainsi que le réducteur 32 à l'intérieur du carter 35 de manière à avoir un actionneur 24 parfaitement étanche au milieu environnant étant donné dans lequel il est utilisé. Dans ce cas, le carter 35 de l'actionneur 24 peut comprendre une pièce en aluminium au niveau du moteur afin de permettre l'évacuation des calories thermiques produites en cours d'utilisation. Il est également envisageable de réaliser la carcasse du moteur 28 de façon que celle-ci soit directement en contact avec l'extérieur afin d'obtenir un meilleur refroidissement du moteur.

A titre indicatif, les caractéristiques des éléments de l'actionneur utilisé dans les différents modes de réalisation peuvent être par exemple, un moteur ayant un couple de 1 N, m et une vitesse de rotation d'environ 7000 tours/minute, un rapport de réducteur du moteur de 4.3 et un rapport de réduction de la vis à bille de 5 mm/tr.

Lorsque le réducteur est supprimé, les caractéristiques des éléments de l'actionneur peuvent être par exemple, un moteur ayant un couple de 2 N.m et une vitesse de rotation d'environ 3500 tours/minute et un rapport de réduction de la vis à bille de 2,3 mm/tr.

## Revendications

1. Essieu (1) pour véhicule automobile à au moins quatre roues directrices pourvu d'au moins deux bras oscillants (2) articulés sur ledit véhicule autour d'un axe de rotation (8) horizontal et portant des supports de roues (4) aptes à pivoter selon un axe sensiblement vertical par rapport auxdits bras oscillants (2) pour orienter les roues, l'axe de rotation desdites roues étant distinct de l'axe de rotation (8) des bras oscillants, le dispositif étant pourvu d'une tringlerie commune de commande d'orientation des roues (15, 19) reliée auxdits supports de roues (4) comprenant un palonnier (15) commandé par un actionneur linéaire (24) comprenant un bras de déplacement (23) mobile suivant son axe, et des moyens moteurs (28, 29) alignés avec l'axe (26) du bras de déplacement (23), **caractérisé en ce que** l'axe (26) du bras de déplacement (23) est confondu avec l'axe de rotation (8) des bras oscillants (2).

2. Essieu selon la revendication 1, dans lequel l'actionneur linéaire (24) est décentré par rapport à l'axe longitudinal médian (9) du véhicule automobile.

3. Essieu selon la revendication 1 ou 2, dans lequel les moyens moteurs comprennent un moteur rotatif (28) et un moyen de conversion (29) d'un mouvement de rotation en un mouvement de translation.

4. Essieu selon la revendication 3, dans lequel le moteur rotatif (28) est un moteur électrique.

5. Essieu selon la revendication 3 ou 4, dans lequel le moteur rotatif (28) est accouplé à un réducteur (32) de type coaxial.

6. Essieu selon l'une quelconque des revendications 3 à 5, dans lequel le moyen de conversion (29) est du type vis-écrou.

7. Essieu selon la revendication 6, dans lequel le moteur rotatif (28) est à l'intérieur du moyen de conversion (29) du type vis-écrou.

8. Essieu selon la revendication 6 ou 7, dans lequel l'un des éléments du moyen de conversion (29) du type vis-écrou est bloqué en translation.

## Claims

1. Axle (1) for a motor vehicle with at least four steering wheels and provided with at least two trailing arms (2) that are articulated to the said vehicle about a horizontal axis (8) of rotation and bearing wheel supports (4) capable of pivoting about a substantially vertical axis with respect to the said trailing arms (2) in order to orientate the wheels, the axis of rotation of the said wheels being distinct from the axis (8) of rotation of the trailing arms, the device being provided with a common linkage for controlling the orientation of the wheels (15, 19), this linkage being connected to the said wheel supports (4) comprising a balance bar (15) controlled by a linear actuator (24) comprising a displacement arm (23) capable of moving along its axis, and drive means (28, 29) aligned with the axis (26) of the displacement arm (23), **characterized in that** the axis (26) of the displacement arm (23) coincides with the axis (8) of rotation of the trailing arms (2).

2. Axle according to Claim 1, in which the linear actuator (24) is offset from the central longitudinal axis (9) of the motor vehicle.

3. Axle according to Claim 1 or 2, in which the drive means comprise a rotary motor (28) and a conversion means (29) for converting a rotary movement into a translational movement.

4. Axle according to Claim 3, in which the rotary motor (28) is an electric motor.

5. Axle according to Claim 3 or 4, in which the rotary motor (28) is coupled to reduction gearing (32) of the coaxial type.

6. Axle according to any one of Claims 3 to 5, in which the conversion means (29) is of the screw-nut type.

7. Axle according to Claim 6, in which the rotary motor (28) lies inside the conversion means (29) of the screw-nut type.

8. Axle according to Claim 6 or 7, in which one of the elements of the conversion means (29) of the screw-nut type is prevented from translational movement.

## Patentansprüche

1. Achse (1) für ein Kraftfahrzeug mit mindestens vier gelenkten Rädern, die mit mindestens zwei Schwenkarmen (2) versehen ist, die am Fahrzeug um eine waagrechte Drehachse (8) angelenkt sind und Radhalter (4) tragen, die fähig sind, gemäß einer bezüglich der Schwenkarme (2) im Wesentlichen senkrechten Achse zu schwenken, um die Räder auszurichten, wobei die Drehachse der Räder sich von der Drehachse (8) der Schwenkarme unterscheidet, wobei die Vorrichtung mit einem mit den Radhaltern (4) verbundenen gemeinsamen Gestänge zur Steuerung der Räder (15, 19) versehen ist, das einen Kipphebel (15) aufweist, der von einem linearen Stellglied (24) gesteuert wird, das einen Verschiebearm (23), der entlang seiner Achse beweglich ist, und Antriebsmittel (28, 29) aufweist, die mit der Achse (26) des Verschiebearms (23) fluchten, **dadurch gekennzeichnet, dass** die Achse (26) des Verschiebearms (23) mit der Drehachse (8) der Schwenkarme (2) zusammenfällt.

2. Achse nach Anspruch 1, bei der das lineare Stellglied (24) bezüglich der mittleren Längsachse (9) des Kraftfahrzeugs exzentrisch ist.

3. Achse nach Anspruch 1 oder 2, bei der die Antriebsmittel einen Drehmotor (28) und ein Mittel (29) zur Umwandlung einer Drehbewegung in eine Translationsbewegung aufweisen.

4. Achse nach Anspruch 3, bei der der Drehmotor (28) ein Elektromotor ist.

5. Achse nach Anspruch 3 oder 4, bei der der Drehmotor (28) mit einem Untersetzungsgetriebe (32) vom koaxialen Typ gekoppelt ist.

6. Achse nach einem der Ansprüche 3 bis 5, bei der das Umwandlungsmittel (29) vom Typ Schraube-Mutter ist.

7. Achse nach Anspruch 6, bei der der Drehmotor (28) sich innerhalb des Umwandlungsmittels (29) vom Typ Schraube-Mutter befindet.

8. Achse nach Anspruch 6 oder 7, bei der eines der Elemente des Umwandlungsmittels (29) vom Typ Schraube-Mutter in Translationsrichtung blockiert ist.
